(19) Europäisches Patentamt
European Patent Office
Office européen des brevets

(11) **EP 4 636 059 A1**

(12) **EUROPEAN PATENT APPLICATION**
published in accordance with Art. 153(4) EPC

(43) Date of publication:
**22.10.2025 Bulletin 2025/43**

(21) Application number: **24750348.5**

(22) Date of filing: **31.01.2024**

(51) International Patent Classification (IPC):
***C10M 105/04*** *(2006.01)* ***C09K 5/04*** *(2006.01)*
***C10N 30/06*** *(2006.01)* ***C10N 40/30*** *(2006.01)*

(52) Cooperative Patent Classification (CPC):
**C09K 5/04; C10M 105/04;** C10N 2030/06;
C10N 2040/30

(86) International application number:
**PCT/JP2024/003111**

(87) International publication number:
**WO 2024/162399 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.02.2023 JP 2023014151**

(71) Applicant: **ENEOS Corporation**
**Chiyoda-ku**
**Tokyo 100-8162 (JP)**

(72) Inventors:
- **ANDO Makoto**
  **Tokyo 100-8162 (JP)**
- **NARA Fumiyuki**
  **Tokyo 100-8162 (JP)**
- **OGATA Hidetoshi**
  **Tokyo 100-8162 (JP)**
- **MIZUTANI Yuya**
  **Tokyo 100-8162 (JP)**
- **TAKAKI Tomohiro**
  **Tokyo 100-8162 (JP)**

(74) Representative: **Grünecker Patent- und Rechtsanwälte**
**PartG mbB**
**Leopoldstraße 4**
**80802 München (DE)**

(54) **BASE OIL FOR REFRIGERATING MACHINE OIL, REFRIGERATING MACHINE OIL, AND WORKING FLUID COMPOSITION**

(57) A base oil for a refrigerating machine oil comprising an olefin represented by the following formula (1):

[Chem. 1]

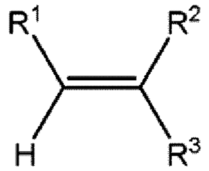

(1)

wherein $R^1$ represents an alkyl group, one of $R^2$ and $R^3$ represents an alkyl group, and the other of $R^2$ and $R^3$ represents a hydrogen atom or an alkyl group.

EP 4 636 059 A1

## Description

### Technical Field

The present disclosure relates to a base oil for a refrigerating machine oil, a refrigerating machine oil, and a working fluid composition.

### Background Art

In a refrigerating machine, it is increasingly required to replace a refrigerant having a relatively high global warming potential (GWP) with a low-GWP refrigerant, for example, one having a GWP of less than 150. Examples of such low-GWP refrigerants include carbon dioxide (R744) refrigerants and hydrocarbon refrigerants.

In addition, there is a demand for improving the energy efficiency of refrigerating machines. Generally, a lower viscosity of the refrigerating machine oil can reduce stirring resistance, so reducing the viscosity of the refrigerating machine oil can lead to improvements in energy efficiency of the refrigerating machine. For example, Patent Literature 1 discloses a refrigerating machine oil having a viscosity grade (VG) of 3 or more and 8 or less. Patent Literature 2 discloses a refrigerating machine oil comprising a mixed base oil containing a low-viscosity base oil and a high-viscosity base oil. On the other hand, lowering the viscosity of refrigerating machine oils makes it more difficult to maintain the oil film in sliding portions, potentially increasing the friction coefficient, so it is not necessarily true that low-viscosity refrigerating machine oils are always preferable.

### Citation List

### Patent Literature

[Patent Literature 1] WO 2006/062245
[Patent Literature 2] WO 2007/105452

### Summary of Invention

### Technical Problem

An object of one aspect of the present invention is to provide a refrigerating machine oil capable of reducing the friction coefficient, and a base oil used for the refrigerating machine oil.

### Solution to Problem

According to the studies of the present inventors, it has been found that by using a base oil comprising a specific olefin, the friction coefficient can be reduced more effectively than when using a base oil comprising only other olefins (α-olefins) or a base oil comprising only a hydrocarbon oil other than an olefin.

The present invention includes the following aspects:

[1] A base oil for a refrigerating machine oil comprising an olefin represented by the following formula (1):

[Chem. 1]

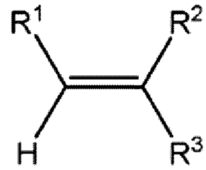

(1)

wherein $R^1$ represents an alkyl group, one of $R^2$ and $R^3$ represents an alkyl group, and the other of $R^2$ and $R^3$ represents a hydrogen atom or an alkyl group.

[2] The base oil according to [1], wherein the average number of carbon atoms of the base oil is 8 or more and 30 or

less.

[3] The base oil according to [1] or [2], wherein the biomass content of the base oil is 10% or more.

[4] The base oil according to any one of [1] to [3], further comprising a hydrocarbon oil other than the olefin.

[5] A refrigerating machine oil comprising:

the base oil according to any one of [1] to [4], and
an additive.

[6] The refrigerating machine oil according to [5], wherein the refrigerating machine oil is used with a refrigerant comprising a hydrocarbon.

[7] A working fluid composition comprising:

the refrigerating machine oil according to [5] or [6], and
a refrigerant.

[8] The working fluid composition according to [7], wherein the refrigerant comprises a hydrocarbon.

## Advantageous Effects of Invention

According to one aspect of the present invention, it is possible to provide a refrigerating machine oil capable of reducing the friction coefficient, and a base oil used for the refrigerating machine oil. In one aspect of the present invention, the friction coefficient reduction effect can be obtained even when the base oil for a refrigerating machine oil and the refrigerating machine oil have low viscosity.

## Description of Embodiments

Hereinafter, embodiments of the present invention will be described in detail. One embodiment of the present invention is a base oil for a refrigerating machine oil (hereinafter also referred to as "base oil (A) for a refrigerating machine oil") comprising an olefin represented by the following formula (1).

[Chem. 2]

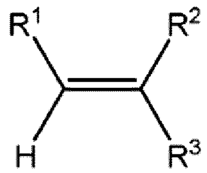

(1)

wherein $R^1$ represents an alkyl group; one of $R^2$ and $R^3$ represents an alkyl group; and the other of $R^2$ and $R^3$ represents a hydrogen atom or an alkyl group.

As the olefin represented by formula (1) has a carbon-carbon double bond in an internal position rather than at the $\alpha$-position, it is also called an internal olefin.

The alkyl group represented by $R^1$ may be linear or branched. The number of carbon atoms of the alkyl group $R^1$ may be 1 or more, 2 or more, 3 or more, 4 or more, 5 or more, or 6 or more, and may be 27 or less, 21 or less, 17 or less, 15 or less, 12 or less, 11 or less, 10 or less, 9 or less, or 8 or less.

The alkyl group represented by $R^2$ or $R^3$ may be linear or branched. The number of carbon atoms of the alkyl group represented by $R^2$ or $R^3$ may be 1 or more, 2 or more, 3 or more, 4 or more, 5 or more, or 6 or more, and may be 12 or less, 11 or less, 10 or less, 9 or less, or 8 or less.

A total number of carbon atoms, or an average of the total number of carbon atoms, of the alkyl groups represented by $R^1$, $R^2$, and $R^3$ may be 6 or more, 8 or more, 9 or more, 10 or more, 11 or more, 12 or more, or 13 or more, and may be 28 or less, 23 or less, 18 or less, 17 or less, 16 or less, or 15 or less.

The number of carbon atoms, or the average number of carbon atoms, of the olefin represented by formula (1) may be 8 or more, 10 or more, 11 or more, 12 or more, 13 or more, 14 or more, or 15 or more, and may be 30 or less, 25 or less, 20 or less, 19 or less, 18 or less, or 17 or less.

In some cases, one of $R^2$ and $R^3$ may be an alkyl group, and the other one may be a hydrogen atom. In this scenario, the olefin represented by formula (1) may be a cis-type olefin having the alkyl group at $R^2$ and a hydrogen atom at $R^3$, or a trans-type olefin having a hydrogen atom at $R^2$ and the alkyl group at $R^3$.

In other cases, both $R^2$ and $R^3$ may be alkyl groups. In this scenario, the number of carbon atoms of the alkyl group represented by $R^2$ may be the same as or different from that of the alkyl group represented by $R^3$. When the alkyl group $R^2$ has a larger number of carbon atoms than the alkyl group $R^3$, the olefin represented by formula (1) may be a cis-type olefin; when the alkyl group $R^3$ has a larger number of carbon atoms than the alkyl group $R^2$, the olefin may be a trans-type olefin.

The olefin represented by formula (1) can be obtained, for example, by isomerizing an $\alpha$-olefin having 8 to 30 carbon atoms obtained by a known method. Specific methods include, for example, a method (JP 2005-239651 A) in which an $\alpha$-olefin obtained by polymerizing ethylene or the like is brought into contact, under reduced water content, with a zeolite and/or montmorillonite catalyst; a method (JP H10-167989 A) in which an olefin is obtained in the presence of water and a crystalline metallosilicate as a catalyst; a method (JP 2011-168528 A) in which an olefin is obtained by decarbonylation of a carboxylic acid having a $\beta$-hydrogen or its derivative; or a method (WO 2014/112522) in which an $\alpha$-olefin obtained by dehydrating a primary aliphatic alcohol is isomerized in the presence of a solid catalyst.

The olefin represented by formula (1) may be produced from conventional petroleum-based raw materials, or from renewable raw materials. From the viewpoint of realizing a sustainable society, it is preferable to use renewable raw materials, more specifically, biomass resources such as plant-derived raw materials (e.g., vegetable oils, saccharides, starches) or animal fats and oils or microalgae. Furthermore, from the viewpoint of producing a refrigerating machine oil compatible with carbon neutrality, it is preferable to use biomass feedstocks such as plant-derived raw materials that absorbs $CO_2$ during growth, and to use, as a raw material, a fatty acid obtained by hydrolysis of the biomass feedstock; aliphatic alcohol obtained by hydrogenation of the fatty acid; or an $\alpha$-olefin obtained by polymerization of ethylene derived from decomposition of the biomass feedstock.

Examples of such biomass feedstocks include animal fats and oils such as beef tallow, lard, and chicken fat; vegetable fats and oils such as soybean oil, rapeseed oil, palm oil, corn oil, cotton seed oil, sunflower oil, olive oil, and safflower oil; non-edible fats and oils; waste oils thereof; and fatty acids obtained by hydrolysis of the above fats and oils.

Whether the olefin represented by formula (1), and the base oil (A) or the refrigerating machine oil comprising the olefin, are derived from a petroleum-based raw material, a biomass feedstock or a mixture thereof can be confirmed by the measurement of biomass content described below.

The base oil (A) for a refrigerating machine oil may consist of the olefin represented by formula (1), or may further comprise secondary components from a rational viewpoint in manufacturing, purification cost, or the like. Examples of the secondary components include byproducts or unreacted components that might be generated in the production process of the olefin represented by formula (1), or components that might be introduced incidental to production process of the olefin represented by formula (1). Specific examples of those secondary components include hydrocarbon oils other than the olefin represented by formula (1), such as $\alpha$-olefins, paraffins, and aromatic compounds. The carbon number distribution of the secondary components may be about the same as that of the olefin represented by formula (1) (i.e., 8 to 30 carbon atoms).

A-olefins may be linear or branched. Paraffins may be linear or branched and may comprise alicyclic paraffins having 1 to 6 rings which may have substituents. The aromatic compounds may include aromatic compounds having 1 to 6 rings which may have substituents.

In one embodiment, the content of the olefin represented by formula (1) in the base oil (A) for a refrigerating machine oi, depending on the production method and yield of the olefin represented by formula (1), may be 50% by mass or more, 60% by mass or more, or 70% by mass or more, and may be 100% by mass or less, 90% by mass or less, or 80% by mass or less, based on the total amount of the base oil (A). The content of the olefin represented by formula (1) may be 50% by mole or more, 60% by mole or more, or 70% by mole or more, and may be 100% by mole or less, 90% by mole or less, or 80% by mole or less, based on the total amount of the base oil (A).

In another embodiment, the content of the olefin represented by formula (1) in the base oil (A) for a refrigerating machine oil may be 5% by mass or more, 10% by mass or more, 20% by mass or more, or 30% by mass or more, and may be 70% by mass or less, 60% by mass or less, 50% by mass or less, or 40% by mass or less, based on the total amount of the base oil (A). The content of the olefin represented by formula (1) may be 5% by mole or more, 10% by mole or more, 20% by mole or more, or 30% by mole or more, and may be 70% by mole or less, 60% by mole or less, 50% by mole or less, or 40% by mole or less, based on the total amount of the base oil (A).

When the base oil (A) for a refrigerating machine oil further comprises an $\alpha$-olefin and/or a paraffin as a hydrocarbon of the secondary component in addition to the olefin represented by formula (1), in one embodiment, the total amount of the olefin represented by formula (1), $\alpha$-olefin, and paraffin may be preferably 70% by mass or more, 80% by mass or more, 90% by mass or more, or 98% by mass or more, based on the total amount of the base oil (A). In this case, the content of $\alpha$-olefin may be preferably 50% by mass or less, 20% by mass or less, 10% by mass or less, or less than 10% by mass, based on the total amount of the base oil (A).

In another embodiment, the total amount of the olefin represented by formula (1), $\alpha$-olefin, and paraffin may be preferably 70% by mole or more, 80% by mole or more, 90% by mole or more, or 98% by mole or more, based on the total amount of the base oil (A). In this case, the content of $\alpha$-olefin may be preferably 50% by mole or less, 20% by mole or less, 10% by mole or less, or less than 10% by mole.

The content of any aromatic compound as the above-mentioned secomdary component may be preferably 2% by mass or less, 1% by mass or less, 0.5% by mass or less, or less than 0.5% by mass, and may be preferably 2% by mole or less, 1% by mole or less, 0.5% by mole or less, or less than 0.5% by mole, based on the total amount of the base oil (A).

The iodine value ($gI_2$/100 g) of the base oil (A) for a refrigerating machine oil may be 10 or more, 30 or more, 50 or more, or 60 or more, and may be 150 or less, 120 or less, or 100 or less. The "iodine value" in the present specification refers to the value measured in accordance with JIS K0070-1992.

The iodine value indicates the amount of iodine reacting per 100 g of sample ($gI_2$/100 g). It is considered that, in hydrocarbons having an average molecule weight M, n moles of iodine (254 × n ($gI_2$)) reacts with 1 mole of a sample in which the average number of carbon-carbon double bonds is n. so the iodine value can be represented by the following formula:

$$\text{Iodine value} = 254 \times n \times 100 / M\ (gI_2/100\ g).$$

Accordingly, the number n (hereinafter also referred to as "n-value") of double bonds contained on average in one molecule of the sample can be represented by:

$$n = (\text{iodine value } (gI2/100\ g) \times M) / 25400.$$

The n-value may be preferably 0.1 or more, 0.3 or more, 0.5 or more, or 0.6 or more, and may be 1.5 or less, 1.2 or less, 1 or less, or 0.9 or less.

The kinematic viscosity at 40°C of the olefin represented by formula (1) and of the base oil (A) for a refrigerating machine oil may be preferably 1 $mm^2/s$ or more, 1.5 $mm^2/s$ or more, or 2 $mm^2/s$ or more, and may be less than 20 $mm^2/s$, 15 $mm^2/s$ or less, 10 $mm^2/s$ or less, 7 $mm^2/s$ or less, 5 $mm^2/s$ or less, 4.5 $mm^2/s$ or less, 4 $mm^2/s$ or less, 3.5 $mm^2/s$ or less, or 3 $mm^2/s$ or less. The "kinematic viscosity" in the present specification refers to the value measured in accordance with JIS K2283:2000.

The kinematic viscosity at 100°C of the olefin represented by formula (1) and of the base oil (A) for a refrigerating machine oil may be preferably 0.5 $mm^2/s$ or more, 0.7 $mm^2/s$ or more, or 0.8 $mm^2/s$ or more, and may be 10 $mm^2/s$ or less, 5 $mm^2/s$ or less, 3 $mm^2/s$ or less, 2 $mm^2/s$ or less, 1.5 $mm^2/s$ or less, 1.2 $mm^2/s$ or less, or 1 $mm^2/s$ or less.

The flash point of the olefin represented by formula (1) and of the base oil (A) for a refrigerating machine oil may be preferably 70°C or higher, 80°C or higher, or 100°C or higher, and may be 160°C or lower, 150°C or lower, or 140°C or lower. The "flash point" in the present specification refers to the value measured by the Cleveland open cup (COC) method described in JIS K2265-4:2007.

The biomass content of the olefin represented by formula (1) and the base oil (A) for a refrigerating machine oil may be preferably 10% or more, 20% or more, 30% or more, 40% or more, 50% or more, 60% or more, 70% or more, 80% or more, or 90% or more, and may be 100%.

Conceptually, "biomass content" refers to the proportion (%) of carbon derived from a biomass resource (or renewable resource) relative to the total organic carbon in a sample. A sample made 100% from biomass resources is expected to have a biomass content of 100%, whereas a sample made 100% from petroleum resources would have a biomass content of 0%, and a mixture would have a content corresponding to the mixture ratio.

The biomass content means the "Biobased Carbon Content" measured by the method of ASTM D6866-21 "Standard Test Methods for Determining the Biobased Content of Solid, Liquid, and Gaseous Samples Using Radiocarbon Analysis," and is calculated by the following formula:

$$\text{Biomass content (Biobased Carbon Content) (\%)} = pMC / REF(pMC)$$

wherein pMC represents a value of "% Modern Carbon" obtained by the formula:(14Aspl / 14Astd) × 100, REF(pMC) represents a pMC corresponding to the year of production, 14Aspl represents a 14C/12C ratio of the sample, and 14Astd represents a 14C/12C ratio of a standard substance. When the calculated biomass content exceeds 100%, the biomass content is considered to be 100%.

Another embodiment of the present invention is a refrigerating machine oil comprising the above-mentioned base oil (A) for a refrigerating machine oil. The base oil (A) for a refrigerating machine oil is comprised as the base oil that constitutes the refrigerating machine oil. The refrigerating machine oil may comprised the base oil as a main component. The content of the base oil may be 50% by mass or more, 70% by mass or more, 90% by mass or more, or 95% by mass or more, based on the total amount of the refrigerating machine oil.

The base oil constituting the refrigerating machine oil may consist of the above base oil (A) for a refrigerating

machine oil, or may further comprise a base oil (hereinafter also referred to as "base oil (B)") different from the base oil (A), in addition to the base oil (A),.

The base oil (B) may be a hydrocarbon oil, and may be either a mineral oil or a synthetic hydrocarbon oil. Examples of the mineral oils include paraffinic or naphthenic mineral oils obtained by appropriately combining conventional petroleum refining processes (solvent deasphalting, solvent extraction, hydrocracking, solvent dewaxing, catalytic dewaxing, hydrotreating, sulfuric acid washing, clay treatment, distillation, etc.) on crude oil or its distillation residue oil. Examples of the synthetic hydrocarbon oils include poly$\alpha$-olefins or hydrogenated poly$\alpha$-olefins, normal paraffins, isoparaffins, alkylbenzenes, and alkylnaphthalenes.

The base oil (B) is preferably an isoparaffin. Examples of the isoparaffin include isoparaffins obtained by refining components comprising normal paraffins obtained by dewaxing in a petroleum refining process or Fisher-Tropsch synthesis, or by refining polymers of olefins such as ethylene, propylene, butylene, diisobutylene, through a refining process appropriately combining hydrogenolysis, hydroisomerization, hydrodewaxing, hydrotreating, distillation, etc.

The kinematic viscosity of the base oil (B) is not particularly limited and can be suitably selected according to the required kinematic viscosity of the refrigerating machine oil. The kinematic viscosity at 40°C of the base oil (B) may be, for example, 1 $mm^2/s$ or more, 1.5 $mm^2/s$ or more, or 2 $mm^2/s$ or more, and may be 1000 $mm^2/s$ or less, 100 $mm^2/s$ or less, less than 20 $mm^2/s$, 15 $mm^2/s$ or less, 10 $mm^2/s$ or less, 7 $mm^2/s$ or less, 5 $mm^2/s$ or less, 4.5 $mm^2/s$ or less, 4 $mm^2/s$ or less, 3.5 $mm^2/s$ or less, or 3 $mm^2/s$ or less.

The kinematic viscosity at 100°C of the base oil (B) may be, for example, 0.5 $mm^2/s$ or more, 0.7 $mm^2/s$ or more, or 0.8 $mm^2/s$ or more, and may be 100 $mm^2/s$ or less, 10 $mm^2/s$ or less, 5 $mm^2/s$ or less, 3 $mm^2/s$ or less, 2 $mm^2/s$ or less, 1.5 $mm^2/s$ or less, 1.2 $mm^2/s$ or less, or 1 $mm^2/s$ or less.

The flash point of the base oil (B) may be 70°C or higher, 80°C or higher, or 100°C or higher, and may be 300°C or lower, 160°C or lower, 150°C or lower, or 140°C or lower.

The number of carbon atoms and average number of carbon atoms of the base oil (B) may each be, for example, 10 or more, 12 or more, or 13 or more, and may be 40 or less, 30 or less, 20 or less, or 18 or less.

In the present specification, the number of carbon atoms and the average number of carbon atoms of the olefin represented by formula (1), the base oil (A) for a refrigerating machine oil, the base oil (B), or a mixture of the base oil (A) and the base oil (B) can each be determined by a known general method, for example, by a hydrocarbon-type analysis method (gas chromatography method) under the following conditions. If another method gives equivalent results, that method may be used.

(Gas Chromatography Conditions)

Column: Non-polar liquid-phase column (length 30 m, inside diameter 0.25 mm$\varphi$, liquid phase thickness 0.1 $\mu$m)
Injection temperature: 350°C
Detector: FID at 360°C
Temperature program: 50°C to 350°C (heating rate: 6°C/min)
Carrier gas: Helium
Injection mode: Split; sample injection amount: 1 $\mu$L (10% solution in toluene)

Where the base oil of the refrigerating machine oil comprises the base oil (A) and the base oil (B), the content of the base oil (B) is preferably 5% by mass or more, 10% by mass or more, 20% by mass or more, 30% by mass or more, 40% by mass or more, or 50% by mass or more, and may be 95% by mass or less, 90% by mass or less, 80% by mass or less, 70% by mass or less, 60% by mass or less, or 50% by mass or less, based on the total amount of the base oil.

The kinematic viscosity at 40°C of the base oil constituting the refrigerating machine oil may be 1 $mm^2/s$ or more, 1.5 $mm^2/s$ or more, or 2 $mm^2/s$ or more, and may be 20 $mm^2/s$ or less, 15 $mm^2/s$ or less, 10 $mm^2/s$ or less, 7 $mm^2/s$ or less, 5 $mm^2/s$ or less, 4.5 $mm^2/s$ or less, 4 $mm^2/s$ or less, 3.5 $mm^2/s$ or less, or 3 $mm^2/s$ or less.

The kinematic viscosity at 100°C of the base oil constituting the refrigerating machine oil may be 0.5 $mm^2/s$ or more, 0.7 $mm^2/s$ or more, or 0.8 $mm^2/s$ or more, and may be 10 $mm^2/s$ or less, 5 $mm^2/s$ or less, 3 $mm^2/s$ or less, 2 $mm^2/s$ or less, 1.5 $mm^2/s$ or less, 1.2 $mm^2/s$ or less, or 1 $mm^2/s$ or less.

The flash point of the base oil constituting the refrigerating machine oil may be 70°C or higher, 80°C or higher, or 100°C or higher, and may be 160°C or lower, 150°C or lower, or 140°C or lower.

The biomass content of the base oil constituting the refrigerating machine oil may be 5% or more, 10% or more, 20% or more, 30% or more, 40% or more, 50% or more, 60% or more, 70% or more, 80% or more, or 90% or more, and may be 100% or less, 90% or less, 80% or less, 70% or less, 60% or less, or 50% or less.

The iodine value ($gI_2$/100 g) of the base oil constituting the refrigerating machine oil may be 5 or more, 10 or more, or 15 or more, and may be 150 or less, 120 or less, or 100 or less.

The n-value (i.e., iodine value ($gI_2$/100 g) × average molecular weight / 25400) of the base oil constituting the refrigerating machine oil may be 0.1 or more, 0.3 or more, or 0.5 or more, and may be 1.5 or less, 1.2 or less, or 1 or less.

In one embodiment, even when the refrigerating machine oil, the base oil constituting the refrigerating machine oil, or the base oil (A) for a refrigerating machine oil has a low viscosity as described above, containing the olefin represented by formula (1) makes it possible to reduce the friction coefficient as compared to a base oil comprising only olefins ($\alpha$-olefins) other than the olefin represented by formula (1) or a base oil comprising only hydrocarbon oils other than olefins.

The refrigerating machine oil may further comprise an oxygen-containing oil in addition to the above base oil. Examples of oxygen-containing oils include esters, ethers, carbonates, ketones, silicones, and polysiloxanes. The term "ester" here does not include the polymers described later. Examples of the esters include monoesters, polyol esters, aromatic esters, dibasic acid esters, complex esters, carbonic esters, or mixtures thereof. Examples of the ethers include polyvinyl ethers, polyalkylene glycols, polyphenyl ethers, and perfluoroethers. The oxygen-containing oil preferably comprises a monoester of a monohydric aliphatic alcohol and a monobasic fatty acid, and may include the monoester, and a polyol ester of a polyhydric alcohol having 2 to 6 hydroxyl groups and a monobasic fatty acid.

Examples of the monohydric aliphatic alcohol for constituting the above-mentioned ester include monohydric aliphatic alcohols having 1 to 20 carbon atoms, preferably 4 to 18 carbon atoms, more preferably 4 to 12 carbon atoms. Examples of the monobasic fatty acid for constructing the above-mentioned ester include monobasic fatty acids having 1 to 20 carbon atoms, preferably 4 to 18 carbon atoms, more preferably 4 to 12 carbon atoms. Examples of the polyhydric alcohol having 2 to 6 hydroxyl groups for constructing such an ester preferably include neopentyl glycol, trimethylolpropane, pentaerythritol, and dipentaerythritol.

From the viewpoint of improving wear resistance, the refrigerating machine oil preferably further comprises an anti-wear agent (also called an extreme-pressure agent) as an additive. Examples of the anti-wear agent include phosphorus-containing anti-wear agents. Specific examples of phosphorus-containing anti-wear agents include phosphates, thiophosphates, acidic phosphates, amine salts of acidic phosphates, and chlorinated phosphates. One or a combination of two or more of these anti-wear agents (preferably phosphorus-containing anti-wear agents) may be used. Among phosphorus-containing anti-wear agents, at least one or a combination of two or more selected from phosphates and thiophosphates is preferred.

Examples of phosphates include trialkyl phosphates, trialkenyl phosphates, and triaryl phosphates. Examples of trialkyl phosphates include tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetra decyl phosphate, tripentadecyl phosphate, trihexadecyl phosphate, triheptadecyl phosphate, and trioctadecyl phosphate. An example of a trialkenyl phosphate is trioleyl phosphate. Examples of triaryl phosphates include triphenyl phosphate, tricresyl phosphate, tri(ethylphenyl) phosphate, tri(butylphenyl) phosphate, trixylenyl phosphate, cresyldiphenyl phosphate, and xylenyldiphenyl phosphate. The phosphate is preferably a triaryl phosphate, more preferably selected from triphenyl phosphate and tricresyl phosphate, and even more preferably tricresyl phosphate.

Examples of thiophosphates include trialkyl phosphorothionates, trialkenyl phosphorothionates, and triaryl phosphorothionates. Examples of trialkyl phosphorothionates include tributyl phosphorothionate, tripentyl phosphorothionate, trihexyl phosphorothionate, triheptyl phosphorothionate, trioctyl phosphorothionate, trinonyl phosphorothionate, tridecyl phosphorothionate, triundecyl phosphorothionate, tridodecyl phosphorothionate, tritridecyl phosphorothionate, tritetra decyl phosphorothionate, tripentadecyl phosphorothionate, trihexadecyl phosphorothionate, triheptadecyl phosphorothionate, and trioctadecyl phosphorothionate. Examples of trialkenyl phosphorothionates include trioleyl phosphorothionate. Examples of triaryl phosphorothionates include triphenyl phosphorothionate, tricresyl phosphorothionate, trixylenyl phosphorothionate, cresyldiphenyl phosphorothionate, and xylenyldiphenyl phosphorothionate. The thiophosphate is preferably triphenyl phosphorothionate.

The content of the anti-wear agent (preferably a phosphorus-containing anti-wear agent) may be preferably 0.1% by mass or more, 0.5% by mass or more, or 1% by mass or more, and may be 5% by mass or less, 4% by mass or less, or 3% by mass or less, based on the total amount of the refrigerating machine oil.

The refrigerating machine oil may further comprise a polymer. For example, the polymer may be a polymer having a higher kinematic viscosity at 40°C than the above base oil. Examples of the polymer include a polymer containing, as monomer units, an unsaturated carboxylic acid ester. The polymer can be obtained by polymerizing one or more monomers containing an unsaturated carboxylic acid ester that is an ester of an unsaturated carboxylic acid and an alcohol.

The polymer is not particularly limited with the proviso that the polymer contains an unsaturated carboxylic acid ester as a monomer unit, and it may further contain other monomers (monomers that can be copolymerized with unsaturated carboxylic acid esters). That is, the polymer may be a homopolymer of a single unsaturated carboxylic acid ester, a copolymer of two or more unsaturated carboxylic acid esters, or a copolymer of one or more unsaturated carboxylic acid esters and one or more other monomers.

The unsaturated carboxylic acid forming the unsaturated carboxylic acid ester has at least one polymerizable

unsaturated bond (polymerizable carbon-carbon double bond) and at least one carboxyl group. The unsaturated carboxylic acid may be, for example, an unsaturated monocarboxylic acid having one polymerizable unsaturated bond and one carboxyl group, or an unsaturated dicarboxylic acid having one polymerizable unsaturated bond and two carboxyl groups. Examples of the unsaturated monocarboxylic acid include acrylic acid and methacrylic acid (collectively referred to hereinafter as "(meth)acrylic acid"), and crotonic acid. Examples of the unsaturated dicarboxylic acid include maleic acid, fumaric acid, citraconic acid, mesaconic acid, and itaconic acid.

The alcohol forming the unsaturated carboxylic acid ester may be an alcohol having about 1 to 40 carbon atoms, preferably containing an alcohol having about 1 to 18 carbon atoms, more preferably containing an alcohol having about 1 to 8 carbon atoms. These alcohols may be linear or branched and may be aliphatic. The alcohol may contain an alcohol having 1 to 18 carbon atoms and an alcohol having 20 to 40 carbon atoms.

When the unsaturated carboxylic acid ester is an unsaturated dicarboxylic acid ester, the unsaturated dicarboxylic acid ester preferably contains at least one selected from unsaturated dicarboxylic acid esters having linear alkyl groups of 4 to 10 carbon atoms.

The monomers other than the unsaturated carboxylic acid ester are not particularly limited. Examples of the monomers include unsaturated carboxylic acids exemplified above as unsaturated carboxylic acids forming unsaturated carboxylic acid esters, anhydrides thereof, and unsaturated hydrocarbon compounds having a polymerizable unsaturated bond. The unsaturated hydrocarbon may be au unsaturated hydrocarbon having 2 to 20 carbon atoms, preferably an $\alpha$-olefin having 2 to 20 carbon atoms or styrene.

The polymer is preferably a copolymer of two or more unsaturated carboxylic acid esters, or a copolymer of one or more unsaturated carboxylic acid esters and one or more $\alpha$-olefins. The copolymer of unsaturated carboxylic acid esters is preferably a copolymer of (meth)acrylic acid esters. The copolymer of unsaturated carboxylic acid esters and $\alpha$-olefins is preferably at least one selected from a copolymer of (meth)acrylic acid esters and $\alpha$-olefins, and a copolymer of unsaturated dicarboxylic acid esters and $\alpha$-olefins, and more preferably a copolymer of unsaturated dicarboxylic acid esters and $\alpha$-olefins.

Regarding the copolymer of unsaturated dicarboxylic acid esters and $\alpha$-olefins, preferred examples of the unsaturated dicarboxylic acid esters include monoesters or diesters of unsaturated dicarboxylic acids such as maleic acid, fumaric acid, citraconic acid, mesaconic acid, and itaconic acid, with a aliphatic alcohol having 3 to 10 carbon atoms such as propanol, butanol, pentanol, hexanol, heptanol, octanol, nonanol, or decanol. The aliphatic alcohol having 3 to 10 carbon atoms is preferably a linear aliphatic alcohol having 4 to 10 carbon atoms. The unsaturated dicarboxylic acid ester is preferably a maleic acid ester. Preferred examples of the maleic acid ester include dimethyl maleate, diethyl maleate, dipropyl maleate, dibutyl maleate, dipentyl maleate, dihexyl maleate, diheptyl maleate, dioctyl maleate, and didecyl maleate.

Where the polymer is a copolymer, the content of the unsaturated carboxylic acid ester may be preferably 10% by mole or more, 30% by mole or more, or 50% by mole or more, and may be 90% by mole or less, 70% by mole or less, or 50% by mole or less, based on the total number of moles of all monomer units composing the copolymer.

When the polymer is a copolymer of an unsaturated carboxylic acid ester and an $\alpha$-olefin, the molar ratio of unsaturated carboxylic acid ester/$\alpha$-olefin is not particularly limited, and may be preferably 1/9 or more, more preferably 3/7 or more, and may be preferably 9/1 or less, more preferably 7/3 or less.

The number average molecular weight (Mn) of the polymer may be preferably 300 or more, more preferably 1000 or more, and even more preferably 1500 or more, 2000 or more, 3000 or more, or 4000 or more, and may be preferably 500000 or less, more preferably 50000 or less, even more preferably 30000 or less, 20000 or less, 15000 or less, or 10000 or less.

The weight average molecular weight (Mw) of the polymer is preferably 400 or more, more preferably 1000 or more, even more preferably 2000 or more, and particularly preferably 3000 or more, 4000 or more, 5000 or more, 6000 or more, 7000 or more, 8000 or more, or 9000 or more, and may be preferably 10000000 or less, more preferably 100000 or less, even more preferably 50000 or less, particularly preferably 30000 or less, or 20000 or less.

The ratio Mw/Mn of the polymer may be preferably 1.2 or more, more preferably 1.5 or more, even more preferably 1.7 or more, and particularly preferably 2 or more, and may be preferably 5 or less, more preferably 3.5 or less, even more preferably 3 or less, and may be 2.5 or less.

In the present specification, the terms "weight average molecular weight (Mw)" and "number average molecular weight (Mn)" refer to the polystyrene-equivalent weight average molecular weight and number average molecular weight, respectively, determined by gel permeation chromatography (GPC) (standard substance: polystyrene) using a Waters APC XT column and tetrahydrofuran as the mobile phase.

The viscosity index of the polymer may be preferably 80 or more, more preferably 140 or more, 180 or more, or 200 or more, and may be preferably 400 or less, more preferably 300 or less, or 250 or less. The "viscosity index" in the present specification refers to the value measured in accordance with JIS K2283:2000.

The polymer according to the present embodiment may be added to the refrigerating machine oil as a polymer additive. The polymer additive may further comprise some other ingredient(s) such as a diluent oil for handling ease during

synthesis or transportation, in addition to the polymer. The above polymer properties (number average molecular weight (Mn), weight average molecular weight (Mw), Mw/Mn, kinematic viscosity at 100°C, kinematic viscosity at 40°C, viscosity index, and coking residue content) can also be read as properties of the polymer additive in its state of addition to the refrigerating machine oil. However, when the polymer additive comprises any other ingredient(s) in addition to the polymer, the Mn and Mw of the polymer additive refer to the values measured after excluding the other ingredient(s).

To determine each average molecular weight of the polymer in the polymer additive or the refrigerating machine oil comprising the polymer additive, a sample in which the other component(s) have been separated and removed from the polymer additive or the refrigerating machine oil by rubber membrane dialysis or the like may be used for measurement by the above GPC. Alternatively, the polymer additive or the refrigerating machine oil may be used as a sample. In this case, each average molecular weight of the polymer can be determined by excluding peaks attributable to the other component(s) in the above-mentioned process of determining each average molecular weight with GPC.

More specific examples of the above polymer (polymer additive) include copolymers of (meth)acrylic acid esters, copolymers of (meth)acrylic acid esters and $\alpha$-olefins, copolymers of maleic acid esters and $\alpha$-olefins, and the like.

The content of the polymer may be 0.1% by mass or more, 0.5% by mass or more, or 0.8% by mass or more, and may be 20% by mass or less, 5% by mass or less, 2% by mass or less, or 1% by mass or less, based on the total amount of the refrigerating machine oil.

The refrigerating machine oil may further comprise other additives in addition to the above-mentioned components. Examples of other additives include antioxidants, acid scavengers, oxygen scavengers, metal deactivators, pour point depressants, detergents/dispersants, and antifoaming agents. The total content of other additives may be 10% by mass or less or 5% by mass or less, based on the total amount of the refrigerating machine oil.

The kinematic viscosity at 40°C of the refrigerating machine oil is preferably 1 $mm^2/s$ or more, 1.5 $mm^2/s$ or more, or 2 $mm^2/s$ or more, and may be 20 $mm^2/s$ or less, 15 $mm^2/s$ or less, 10 $mm^2/s$ or less, 7 $mm^2/s$ or less, 5 $mm^2/s$ or less, 4.5 $mm^2/s$ or less, 4 $mm^2/s$ or less, 3.5 $mm^2/s$ or less, or 3 $mm^2/s$ or less.

The kinematic viscosity at 100°C of the refrigerating machine oil is preferably 0.5 $mm^2/s$ or more, 0.7 $mm^2/s$ or more, or 0.8 $mm^2/s$ or more, and may be 10 $mm^2/s$ or less, 5 $mm^2/s$ or less, 3 $mm^2/s$ or less, 2 $mm^2/s$ or less, 1.5 $mm^2/s$ or less, 1.2 $mm^2/s$ or less, or 1 $mm^2/s$ or less.

In one embodiment, even when the refrigerating machine oil has low viscosity as described above, by comprising a base oil that contains both the olefin represented by formula (1) and a hydrocarbon oil other than the olefin, it is possible to reduce the friction coefficient compared to a refrigerating machine oil comprising a base oil that contains only an $\alpha$-olefin or only a hydrocarbon oil other than the olefin represented by formula (1).

The pour point of the refrigerating machine oil may be 10°C or lower, 0°C or lower, -10°C or lower, -20°C or lower, -30°C or lower, or -40°C or lower. The "pour point" in the present specification refers to the value measured in accordance with JIS K2269:1987.

From the viewpoint of further reducing the friction coefficient, the iodine value ($gI_2$/100 g) of the refrigerating machine oil may be 2 or more, 5 or more, 10 or more, 15 or more, or 20 or more, and may be 75 or less, 70 or less, 65 or less, 60 or less, or 55 or less.

In a refrigerating machine equipped with a compressor, a condenser, an expansion mechanism, and an evaporator, the refrigerating machine oil may be mixed with a refrigerant and exist as a working fluid composition. That is, another embodiment of the present invention is a working fluid composition comprising the above refrigerating machine oil and a refrigerant. The content of the refrigerating machine oil in the working fluid composition may be 1 part by mass or more or 2 parts by mass or more, and may be 500 parts by mass or less or 400 parts by mass or less, relative to 100 parts by mass of the refrigerant.

Examples of the refrigerant include hydrocarbons, saturated fluorocarbons, unsaturated fluorocarbons, fluorine-containing ethers (e.g., perfluoroethers), bis(trifluoromethyl) sulfide, trifluoroiodomethane, ammonia, and carbon dioxide.

The refrigerant preferably comprises a hydrocarbon. The hydrocarbon content is preferably 50% by mass or more, 60% by mass or more, 70% by mass or more, 80% by mass or more, 90% by mass or more, or 95% by mass or more, based on the total amount of the refrigerant. The refrigerant may consist of the hydrocarbon.

The hydrocarbon is preferably a hydrocarbon having 1 to 5 carbon atoms, more preferably 2 to 4 carbon atoms. Examples of the hydrocarbon include methane, ethylene, ethane, propylene, propane (R290), cyclopropane, normal butane, isobutane (R600a), cyclobutane, methylcyclopropane, 2-methylbutane, and normal pentane. The refrigerant may comprise two or more of these hydrocarbons. Preferably, the refrigerant comprises a hydrocarbon that is a gas at 25°C and 1 atm, more preferably propane, normal butane, isobutane, 2-methylbutane, or a mixture thereof.

## Examples

Hereinafter, the present invention will be more specifically described based on Examples; however, the present invention is not limited to the following Examples.

The refrigerating machine oils of Examples 1 and 2 and Reference Examples 1 and 2 shown in Table 1 were

prepared, by adding a phosphorus-based anti-wear agent (phosphate ester and thiophosphate ester) and a copolymer of a maleic acid ester and an $\alpha$-olefin having 8 to 10 carbon atoms (Mn: 8300, Mw: 12800, Mw/Mn: 1.5) in a total amount of 2.7% by mass (based on the total amount of the refrigerating machine oil) to each of the following base oils 1 to 4.

(Base Oil 1)

A hydrocarbon oil containing, as its main component, an olefin represented by formula (1) (raw material: derived from vegetable oil/fat; content of the olefin represented by formula (1): 70 mol% or more (the remainder being paraffins and less than 10 mol% of $\alpha$-olefin); kinematic viscosity at 40°C: 2.7 $mm^2/s$; kinematic viscosity at 100°C: 1.2 $mm^2/s$; flash point: 136°C; biomass content: 100%; total number of carbon atoms of the alkyl groups represented by $R^1$, $R^2$, and $R^3$: 12 to 16; average of the total number of carbon atoms: 14; average molecular weight: 226; iodine value (gI2/100 g): 94.6; n-value: 0.84; pour point: -15°C).

(Base Oil 2)

A $\alpha$-olefin having 16 carbon atoms (1-hexadecene (reagent); kinematic viscosity at 40°C: 2.6 $mm^2/s$; kinematic viscosity at 100°C: 1.1 $mm^2/s$; flash point: 135°C; biomass content: 0%; iodine value ($gI_2$/100 g): 113; n-value: 1.0; pour point: 2.5°C).

(Base Oil 3)

A paraffinic base oil comprising, as a main component, isoparaffins obtained by hydrogenolysis/isomerization/-refining and fractional distillation of a paraffinic component synthesized from carbon monoxide and hydrogen by the Fischer-Tropsch reaction (aromatic content <0.5% by mass; ASTM color: 0; kinematic viscosity at 40°C: 2.2 $mm^2/s$; kinematic viscosity at 100°C: 0.98 $mm^2/s$; biomass content: 0%; flash point: 120°C; number of carbon atoms: 13-16; average number of carbon atoms: 14; n-value: 0; pour point: <-45°C).

(Base Oil 4)

A base oil obtained by mixing 20% by mass of the above base oil 1 with 80% by mass of the above base oil 3 (kinematic viscosity at 40°C: 2.3 $mm^2/s$; kinematic viscosity at 100°C: 1.0 $mm^2/s$; flash point: 123°C; biomass content: 20%; iodine value ($gI_2$/100 g): 19; n-value: 0.17; pour point: -40°C).

(Evaluation of Friction properties)

The friction properties of each obtained refrigerating machine oil were evaluated as follows:

Using an MTM (Mini Traction Machine) tester (manufactured by PCS Instruments), the friction coefficient ($\mu$) was measured under the following conditions. The results are shown in Table 1. A smaller coefficient of friction indicates better friction characteristics.
Ball and disk: Standard test specimens (AISI 52100)
Test temperature: 40°C
Sliding speed: 0.3-0.9 m/s (partial data excerpted)
Load: 10 N
Slip ratio: 30%

Note that the sliding speed is taken as |UD - UB| (m/s), where UD is the disk speed (m/s) at the sliding portion, and UB is the ball speed (m/s) at the sliding portion.

[Table 1]

| | | Example 1 | Reference Example 1 | Reference Example 1 | Example 2 |
|---|---|---|---|---|---|
| Type of base oil | | Base oil 1 | Base oil 2 | Base oil 3 | Base oil 4 |
| Properties of refrigerating machine oil | Biomass content (%) | 97 | 0 | 0 | 19.5 |
| | Iodine value ($gI_2$/100g) | 92 | 110 | <1 | 18 |
| | Kinematic viscosity at 40° C ($mm^2/s$) | 2.8 | 2.7 | 2.2 | 2.3 |
| | Kinematic viscosity at 100° C ($mm^2/s$) | 1.2 | 1.2 | 1.0 | 1.0 |
| | Pour point (° C) | -15 | 2.5 | <-45 | -40 |
| Friction coefficient | Sliding speed (m/s) | | | | |
| | 0.9 | 0.0044 | 0.0170 | 0.0085 | 0.0061 |
| | 0.75 | 0.0042 | 0.0173 | 0.0088 | 0.0063 |
| | 0.6 | 0.0043 | 0.0180 | 0.0094 | 0.0065 |
| | 0.45 | 0.0042 | 0.0186 | 0.0112 | 0.0071 |
| | 0.3 | 0.0056 | 0.0197 | 0.0158 | 0.0093 |

(Evaluation of Stability)

An autoclave test was conducted using base oil 1 or base oil 4, and R600a as a refrigerant. Specifically, 30 g of each base oil, whose water content was adjusted to less than 10 ppm, and iron, copper, and aluminum catalysts (each 0.6 mmφ × 30 mm) were placed in a glass container inside a 200 mL pressure-resistant vessel. Under reduced pressure, 30 g of R600a was sealed in. After holding at 175°C for two weeks, the base oil was recovered and its color (ASTM color) and acid value were measured. For both base oil 1 and base oil 4, the color was L0.5 and the acid value was less than 0.01 mgKOH/g, confirming no stability issues.

(Low-Temperature Precipitation Test Under Coexistence with Refrigerant)

A low-temperature precipitation test was conducted using the refrigerating machine oil of Example 1 or Example 2, and R600a that is a hydrocarbon refrigerant. Specifically, a working fluid composition was prepared by mixing the refrigerating machine oil and this refrigerant at a mass ratio of 2/8, and a low-temperature precipitation test was carried out in accordance with Appendix A of JIS K2211 (2009). Even when these working fluids were cooled to -55°C, no filamentous precipitates, granular precipitates, haze, or cloudiness were observed, indicating no tendency toward precipitation at low temperatures.

**Claims**

1. A base oil for a refrigerating machine oil comprising an olefin represented by the following formula (1):

[Chem. 1]

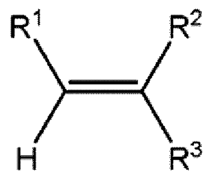

(1)

wherein $R^1$ represents an alkyl group, one of $R^2$ and $R^3$ represents an alkyl group, and the other of $R^2$ and $R^3$ represents a hydrogen atom or an alkyl group.

2. The base oil according to claim 1, wherein the average number of carbon atoms of the base oil is 8 or more and 30 or

less.

**3.** The base oil according to claim 1, wherein the biomass content of the base oil is 10% or more.

**4.** The base oil according to claim 1, further comprising a hydrocarbon oil other than the olefin.

**5.** A refrigerating machine oil comprising:

the base oil according to any one of claims 1 to 4, and
an additive.

**6.** The refrigerating machine oil according to claim 5, wherein the refrigerating machine oil is used with a refrigerant comprising a hydrocarbon.

**7.** A working fluid composition comprising:

the refrigerating machine oil according to claim 5, and
a refrigerant.

**8.** The working fluid composition according to claim 7, wherein the refrigerant comprises a hydrocarbon.

**INTERNATIONAL SEARCH REPORT**

International application No. **PCT/JP2024/003111**

**A. CLASSIFICATION OF SUBJECT MATTER**

***C10M 105/04***(2006.01)i; ***C09K 5/04***(2006.01)i; *C10N 30/06*(2006.01)n; *C10N 40/30*(2006.01)n
FI: C10M105/04 ZAB; C09K5/04 B; C10N40:30; C10N30:06

According to International Patent Classification (IPC) or to both national classification and IPC

**B. FIELDS SEARCHED**

Minimum documentation searched (classification system followed by classification symbols)

C10M101/00-177/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-544282 A (CHEVRON U.S.A. INC.) 17 October 2022 (2022-10-17) claims 1-16 | 1-8 |
| A | JP 2015-81287 A (SHOWA SHELL SEKIYU KK) 27 April 2015 (2015-04-27) claims 1-15 | 1-8 |
| A | JP 2011-517702 A (INEOS USA LLC) 16 June 2011 (2011-06-16) claims 1-25 | 1-8 |
| A | WO 2009/066722 A1 (IDEMITSU KOSAN CO., LTD.) 28 May 2009 (2009-05-28) claims 1-14 | 1-8 |
| P, A | JP 2023-173003 A (KAO CORPORATION) 07 December 2023 (2023-12-07) claims 1-7 | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/003111**

| Patent document cited in search report | Publication date (day/month/year) | Patent family member(s) | Publication date (day/month/year) |
|---|---|---|---|
| JP 2022-544282 A | 17 October 2022 | WO 2021/028877 A1<br>claims 1-16<br>US 2021/0047577 A1<br>EP 4013839 A1<br>KR 10-2022-0047299 A<br>CN 114423848 A | |
| JP 2015-81287 A | 27 April 2015 | (Family: none) | |
| JP 2011-517702 A | 16 June 2011 | WO 2009/073135 A1<br>claims 1-25<br>US 2011/0039743 A1<br>EP 2222823 A1<br>CA 2706910 A1<br>KR 10-2010-0097191 A<br>CN 101883838 A<br>MX 2010005877 A<br>RU 2010126538 A | |
| WO 2009/066722 A1 | 28 May 2009 | US 2010/0234256 A1<br>claims 1-14<br>EP 2236589 A1<br>CN 101868522 A<br>KR 10-2010-0091225 A | |
| JP 2023-173003 A | 07 December 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006062245 A
- WO 2007105452 A
- JP 2005239651 A
- JP H10167989 A
- JP 2011168528 A
- WO 2014112522 A